# EUROPEAN PATENT APPLICATION

(11) **EP 4 592 181 A1**
(43) Date of publication of application: **30.07.2025**
(21) Application number: 25153964.9
(22) Date of filing: 24.01.2025
(51) Int. Cl.: B64D 11/06, B60N 2/12, B60N 2/22

(54) **LOCK SPRING DAMPER SYSTEM**

(30) Priority: 25.01.2024 US 202418422564
(71) Applicant: B/E Aerospace, Inc., Winston-Salem, NC 27105 (US)
(72) Inventor: KUYPER, John R., Winston-Salem, 27103 (US); POOLE, David J., Walkertown, 27051 (US); VALDES DE LA GARZA, Javier, Pfafftown, 27040 (US); SUHRE, Ryan J., Winston-Salem, 27106 (US); LOMAN, Jeremy R., Lexington, 27295 (US)
(74) Representative: Dehns

(57) **Abstract**

A passenger seat is disclosed. The passenger seat may include a means (204, 208, 212, 216) for guiding a seat pan (128) of the passenger seat (100) forward as the seat pan moves from an upright sitting position to a recline sitting position. A passenger seat may include a pivot attachment (408) coupled to the seat pan and a seat back (112) of the passenger seat, wherein the pivot attachment enables a lumbar region of the seat back to move forward and lower when the seat pan moves from the upright sitting position to the recline sitting position. A passenger seat may include a means for guiding the lumbar region of the seat back. A passenger seat may include a spring (424) coupled to the seat back and a frame component of the passenger seat, wherein the spring biases the passenger seat from the recline sitting position to the upright sitting position.

## Description

### BACKGROUND

Reclining seats, such as reclining seats in passenger aircraft, often result in a passenger being lowered or "dropping down" when the seat is moved from an upright sitting position to a recline sitting position. This action of dropping down can be sudden, causing stress to both the passenger and the seat recline system. Therefore, there is a need for a seat, seat recline system, and method for reclining seats that can safely recline without causing damage to the passenger or the seat.

### SUMMARY

In accordance with one aspect, there is provided a recline system for a passenger seat including: a means for guiding a seat pan of the passenger seat forward as the seat pan moves from an upright sitting position to a recline sitting position; a pivot attachment coupled to the seat pan and a seat back of the passenger seat, wherein the pivot attachment enables a lumbar region of the seat back to move forward and lower when the seat pan moves from the upright sitting position to the recline sitting position; a means for guiding the lumbar region of the seat back; and a spring coupled to the seat back and a frame component of the passenger seat, wherein the spring biases the passenger seat from the recline sitting position to the upright sitting position.

In some embodiments, the techniques described herein relate to a recline system, wherein the spring includes a locking gas spring, wherein the locking gas spring dampens the acceleration of the passenger seat from the upright sitting position to the recline sitting position.

In some embodiments, the techniques described herein relate to a recline system, wherein the means for guiding the seat pan includes a first seat pan roller operatively coupled to the seat pan configured to roll along a first seat pan roller track.

In some embodiments, the techniques described herein relate to a recline system, wherein the means for guiding the seat pan further includes a second seat pan roller operatively coupled to the seat pan configured to roll along a second seat pan roller track.

In some embodiments, the techniques described herein relate to a recline system, wherein the first seat pan roller and the second seat pan roller are coupled to each other by a stability bar.

In some embodiments, the techniques described herein relate to a recline system, wherein the first seat roller track is integrated into a spreader.

In some embodiments, the techniques described herein relate to a recline system, wherein the means for guiding the lumbar region of the seat back includes at least one seat back roller coupled to the seat back configured to roll along a seat back roller track.

In some embodiments, the techniques described herein relate to a recline system, wherein a top end of the spring is coupled to the seat back.

In some embodiments, the techniques described herein relate to a recline system, wherein the seat back includes a superior end and an inferior end and the seat pan includes a lateral end and medial end, wherein a bottom end of the spring is coupled to the frame at a position below the inferior end of the seat back, and medially from the medial end of the seat pan.

In some embodiments, the techniques described herein relate to a recline system, wherein the pivot attachment includes a pivot plate, wherein the pivot plate includes: a seat pan attachment site configured to operatively couple to the seat pan, wherein the seat pan and the pivot plate are configured to pivot relative to each other; and a seat back attachment site configured to operatively couple to the seat back, wherein the seat back and the pivot plate are configured to pivot relative to each other.

In accordance with another aspect, there is provided a passenger seat including: a frame including: a left spreader; a right spreader; a beam coupled to the left spreader and the right spreader; and a lower frame member coupled to the left spreader and the right spreader, and positioned below a seat pan; the seat pan mounted between the left spreader and the right spreader, the seat pan including a seat pan frame; a seat back pivotably coupled to the seat pan; a means for guiding the seat pan forward and lower as the seat pan moves from an upright sitting position to a recline sitting position including a first seat pan roller operatively coupled to the seat pan configured to roll along a first seat pan roller track; a means for guiding the seat back including at least one seat back roller coupled to the seat back configured to roll along a seat back roller track; a pivot attachment coupled to the seat pan and the seat back, wherein the pivot attachment enables a lumbar region of the seat back to move forward and lower when the seat pan moves from the upright sitting position to the recline sitting position; and a means for preventing over-acceleration of a movement of the passenger seat from the upright sitting position to the recline sitting position.

In some embodiments, the techniques described herein relate to a passenger seat, wherein the means for guiding the seat pan further includes a second seat pan roller operatively coupled to the seat pan configured to roll along a second seat pan roller track.

In some embodiments, the techniques described herein relate to a passenger seat, wherein the means for preventing the over-acceleration of a movement of the passenger seat from the upright sitting position to the recline sitting position includes a spring coupled to the seat back and the frame of the passenger seat, wherein a top end of the spring is coupled to the seat, wherein a bottom end of the spring is coupled to the frame at a position below an inferior end of the seat back, and medially from a medial end of the seat pan.

In some embodiments, the techniques described herein relate to a passenger seat, wherein the means for preventing the over-acceleration of a movement of the passenger seat from the upright sitting position to the recline sitting position includes: a first linkage rod including: a first section coupled to a first frame component; a second section coupled to the seat pan; and a third section end couplable to a spring; and the spring including: a first spring end coupled to the third section; and a second spring end coupled to a second frame component, wherein an articulation of the passenger seat from the upright sitting position to the recline sitting position engages the spring.

In some embodiments, the techniques described herein relate to a passenger seat, wherein the means for preventing the over-acceleration of a movement of the passenger seat from the upright sitting position to the recline sitting position includes: a rack coupled to the frame; a rotary dampener mount coupled to the seat pan; a rotary dampener coupled to the seat pan; a shaft operatively coupled to the rotary dampener; and configured to rotate relative to the rotary dampener; a pinion coupled to the shaft, wherein the pinion is configured to interface with the rack; and a torsion spring operationally coupled to the shaft and the pinion, wherein the rotation of the pinion along the rack changes a torsion force within the torsion spring.

In some embodiments, the techniques described herein relate to a passenger seat, wherein the means for preventing the over-acceleration of a movement of the passenger seat from the upright sitting position to the recline sitting position includes: a seat pan damper that includes: a rotary dampener coupled to the seat pan, the seat back, or the frame of the passenger seat; a shaft coupled to the rotary dampener on a first end, and coupled to a bearing on a second end, the shaft comprising a spiral thread; a spiral nut carriage slidably coupled to the shaft, wherein a sliding of the spiral nut carriage along the shaft caused the shaft to spin due to the interaction of the spiral nut carriage with the spiral thread; and a return spring coiled around the shaft; and disposed between the rotary dampener and the spiral nut carriage.

In some embodiments, the techniques described herein relate to a passenger seat, wherein the means for preventing over-acceleration of a movement of the passenger seat from the upright sitting position to the recline sitting position includes: A first linkage coupled to a first frame component; A second linkage coupled to the first linkage and the seat pan; A spring coupled to the first frame component or a second frame component and to the first linkage or the second linkage, wherein the movement of the passenger seat from the upright sitting position to the recline sitting position compresses the spring.

In some embodiments, the techniques described herein relate to a passenger seat, wherein the means for preventing over-acceleration of a movement of the passenger seat from the upright sitting position to the recline sitting position includes: a rod; at least one bushing coupled to the frame and configured to accommodate the rod; a rotary dampener coupled to one of the at least one bushing coupled to a first end of the rod, wherein a rotation of the rod within the at least one bushing is dampened by the rotary dampener; a torsion spring coiled around the rod, wherein a rotation of the rod changes a torsion force within the torsion spring; at least one cable reel encompassing the rod; and at least one cable coupled to the at least one cable reel and the seat pan, wherein the movement of the passenger seat from the upright sitting position to the recline sitting position causes the rod to rotate and changes a length of the at least one cable that is wrapped around the at least one cable reel.

In some embodiments, the techniques described herein relate to a method for reclining an aircraft passenger seat from an upright sitting position to a reclined sitting position including: pressing against a front side of a seat back of the passenger seat; and moving the seat back from the upright sitting position to the recline sitting position, wherein moving the seat back from the upright sitting position to a recline sitting position includes: moving a first seat pan roller along a first seat pan roller track from a first position to a second position; moving a second seat pan roller along a second seat pan roller track from a first position to a second position; moving a seat back roller along a seat back roller track from a first position to a second position; and adjusting a spring length, wherein the spring is operatively coupled to the seat back and a spreader.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present invention are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a side view of a passenger seat, in accordance with one or more embodiments of the invention.
FIG. 2 illustrates a close-up side view of a passenger seat, in accordance with one or more embodiments of the invention.
FIG. 3 illustrates a perspective view of a pair of passenger seats, in accordance with one or more embodiments of the invention.
FIG. 4A illustrates a close-up side view of a passenger seat in an upright sitting position with the left spreader removed, in accordance with one or more embodiments of the invention.
FIG. 4B illustrates a close-up side view of a passenger seat in a recline sitting position with the left spreader removed, in accordance with one or more embodiments of the invention.
FIG. 4C illustrates a close-up side view of a passenger seat in an upright sitting position with the left spreader removed, focusing on the pivot attachment, in accordance with one or more embodiments of the invention.
FIG. 4D illustrates a close-up side view of a passenger seat in an upright sitting position with the left spreader removed, focusing on a spring of a recline mechanism, in accordance with one or more embodiments of the invention.
FIG. 5A illustrates a block diagram of a method for reclining an aircraft passenger seat from an upright sitting position to a reclined sitting position, in accordance with one or more embodiments of the invention.
FIG. 5B illustrates a close-up side view of passenger seats in the upright sitting position and the recline sitting position, each having a recline mechanism that includes a spring attached to the passenger seat frame and seat back, in accordance with one or more embodiments of the invention.
FIG. 6A illustrates a perspective view of a passenger seat with a recline mechanism that includes a one-bar linkage assembly, in accordance with one or more embodiments of the invention.
FIG. 6B illustrates a close-up perspective view of a passenger seat with a recline mechanism that includes a one-bar linkage assembly, in accordance with one or more embodiments of the invention.
FIG. 6C illustrates a pan view of a seat pan with a recline mechanism that includes a one-bar linkage assembly, in accordance with one or more embodiments of the invention.
FIG. 7A illustrates a perspective view of a passenger seat with a recline mechanism that includes a rack and pinion assembly, in accordance with one or more embodiments of the invention.
FIG. 7B illustrates a close-up perspective view of a passenger seat with a recline mechanism that includes a rack and pinion assembly, in accordance with one or more embodiments of the invention.
FIG. 7C illustrates a close-up view of a rack and pinion assembly as incorporated into a passenger seat, in accordance with one or more embodiments of the invention.
FIG. 8 illustrates a perspective view of a seat pan damper assembly, in accordance with one or more embodiments of the invention.
FIG. 9A illustrates a perspective view of a passenger seat with a recline mechanism that includes a cam plate assembly 900, in accordance with one or more embodiments of the invention.
FIG. 9B illustrates a close-up pan view of a seat pan with a recline mechanism that includes a cam plate assembly 900, in accordance with one or more embodiments of the invention.
FIG. 9C illustrates a close-up perspective view of a cam plate assembly as incorporated into a seat pan, in accordance with one or more embodiments of the invention.
FIG. 10A illustrates a perspective view of a passenger seat with a recline mechanism that includes a two-bar linkage assembly, in accordance with one or more embodiments of the invention.
FIG. 10B illustrates a close-up perspective view of a passenger seat with a recline mechanism that includes a two-bar linkage assembly, in accordance with one or more embodiments of the invention.
FIG. 10C illustrates a close-up pan view of a seat pan with a recline mechanism that includes a two-bar linkage assembly, with a spring of the two-bar linkage assembly in an extended position, in accordance with one or more embodiments of the invention.
FIG. 10D illustrates a close-up pan view of a seat pan with a recline mechanism that includes a two-bar linkage assembly, with a spring of the two-bar linkage assembly in a shortened position, in accordance with one or more embodiments of the invention.
FIG. 11A illustrates a perspective view of a passenger seat with a recline mechanism that includes a cable assembly, in accordance with one or more embodiments of the invention.
FIG. 11B illustrates a close-up view of a passenger with a recline mechanism that includes a cable assembly, in accordance with one or more embodiments of the invention.
FIG. 11C illustrates a close-up pan view of a cable assembly incorporated into a seat pan, in accordance with one or more embodiments of the invention.
FIG. 11D illustrates a close-up perspective view of a cable assembly incorporated into a seat pan, in accordance with one or more embodiments of the invention.

### DETAILED DESCRIPTION

Before explaining one or more embodiments of the invention in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the invention. However, it will be apparent to one of ordinary skill in the art having the benefit of the instant invention that the embodiments disclosed herein may be practiced without some of these specific details. In other instances, well-known features may not be described in detail to avoid unnecessarily complicating the instant invention.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the invention in any way unless expressly stated to the contrary.

Further, unless expressly stated to the contrary, "or" refers to an inclusive or and not to an exclusive or. For example, a condition A or B is satisfied by anyone of the following: A is true (or present), and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "embodiments" means that a particular element, feature, structure, or characteristic described in connection with the embodiment is included in at least one embodiment disclosed herein. The appearances of the phrase "in embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant invention.

Broadly, embodiments of the inventive concepts disclosed herein are directed to a recline system (e.g., a means for preventing over-acceleration of a movement of a passenger seat from the upright sitting position to the recline sitting position), a passenger seat utilizing the recline system, and a method for using the recline system. The recline system uses a set of rollers that guides a seat pan and seat back from the upright sitting position to the recline sitting position, and from the recline sitting position to the upright sitting position. The recline system includes a dampener (e.g., a spring) that ensures that there is no slamming of the seat as the seat actuates into the recline sitting position.

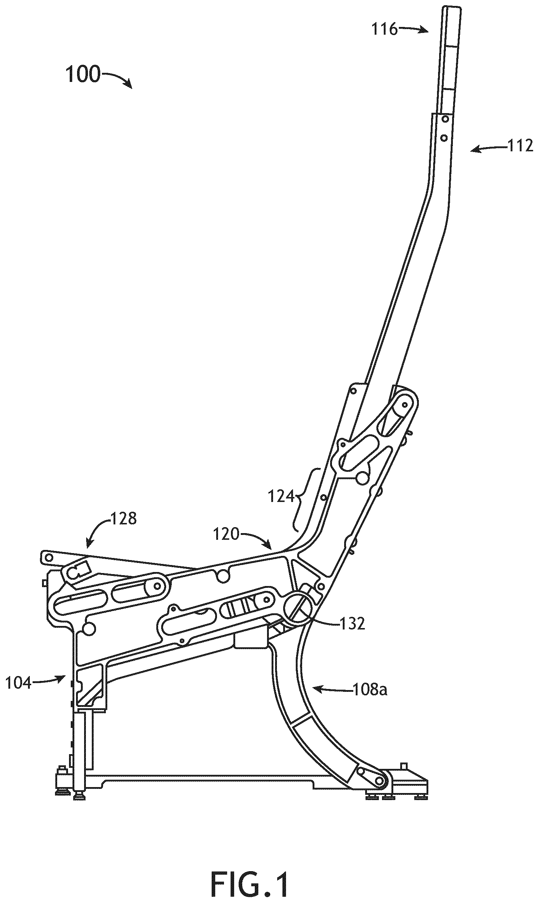

FIG. 1 is a side view of a passenger seat 100 (e.g., aircraft passenger seat) configured to use the recline system. The passenger seat includes a frame 104 that affixes to the floor of a vehicle (e.g., an airplane) and provides a foundation for the seating elements to operatively couple. The frame 104 is rigid and immobile and comprises a set of frame components that are immobilized (e.g., relative to the moveable aspects of the seat as described herein). For example, the frame 104 may include a left spreader 108a and a right spreader 108b (not visible in FIG. 1). The passenger seat 100 further includes a seat back 112 having a superior end 116, an inferior end 120, and a lumbar region 124 (e.g., the seat pan 128 mounted between the left and right spreaders). The passenger seat 100 further includes a seat pan 128 operatively coupled to the seat back. The seat back 112 is pivotably coupled to the seat pan 128. The passenger seat 100 may further include a throughhole 132 for accepting a spreader bar.

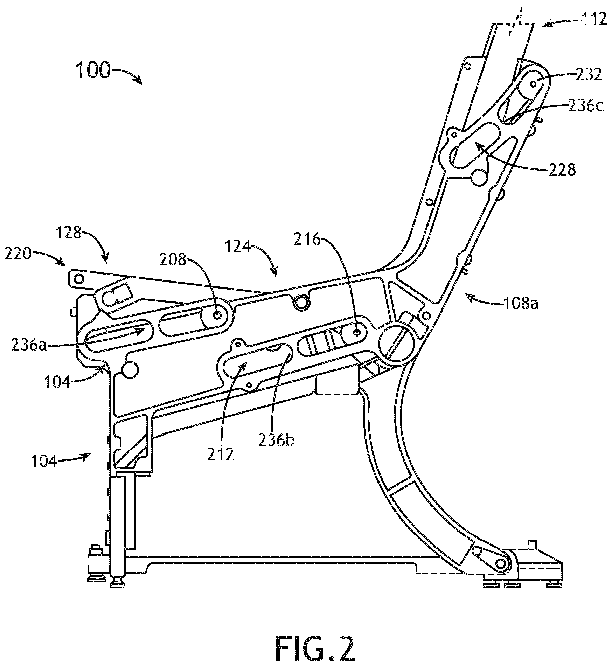

FIG. 2 is a close-up side view of the passenger seat 100, focusing on the region where components of the recline mechanism are positioned. Several of the components of the recline mechanism are partially or totally obscured in FIG. 2 by the left spreader 108a. In embodiments, the passenger seat includes a first seat pan roller track 204 integrated into the frame 104 and/or spreader 108a-b, and a first seat pan roller 208 operatively coupled to the seat pan 128 and configured to roll along the first seat back roller track 204. Movement of the first seat pan roller 208 along the first seat back roller track 204 enables the seat pan 128 to move from a forward sitting position as the passenger seat 100 articulates from the upright sitting position to a recline sitting position.

In embodiments, the passenger seat includes a second seat pan roller track 212 integrated into the frame 104 and/or spreader 108a-b, and a second seat pan roller 216 operatively coupled to the seat pan 128 and configured to roll along the second seat back roller track 212. As with the first seat pan roller 208 and first seat pan roller track 204, the movement of the second seat pan roller track 212 enables the seat pan 128 to move forward as the seat articulates from the upright sitting position to a recline sitting position. The first seat pan roller 208 and second seat pan roller 216 may include any type of rolling, rotating, or sliding device, such as a wheel (e.g., a wheel and bearing) that enables the first seat pan roller 208 and second seat pan roller 216 to roll, slide, and/or rotate.

The pitch of the seat pan 128 and the lateral movement of the seat pan 128 are controlled by the placement of the seat pan roller tracks 204, 212. For example, if the tracks were to be lengthened, the seat pan would have a longer lateral movement (e.g., the passenger would have greater back-and-forth movement). In another example, if the pitch of the second seat pan roller track 212 is adjusted downward relative to the pitch of the first seat pan roller track 204, a lateral end 220 of the seat pan 128 would raise further and a medial end 224 of the seat pan 128 would lower further upon articulation of the passenger seat 100 from the upright sitting position to the recline sitting position. In another example, if the pitch of the second seat pan roller track 212 is adjusted upward relative to the pitch of the first seat pan roller track 204, a lateral end 220 of the seat pan 128 would lower further and a medial end 224 of the seat pan 128 would raise further upon articulation of the passenger seat 100 from the upright sitting position to the recline sitting position.

In embodiments, the passenger seat includes a seat back track 228 integrated into the frame 104 and/or spreader 108a-b, and a seat back roller 232 operatively coupled to the seat back 112 and configured to roll along the seat back track 228. Movement of the second seat pan roller track 212 enables the lumbar region 124 of the seat pan 128 to move forward and down as the seat articulates from the upright sitting position to a recline sitting position. Because the seat back 112 and the seat pan 128 are pivotably coupled, the position of the seat back 112 is dependent on both the position of the seat pan 128 and the position of the seat back roller 232 within the seat back track 228. The first seat pan track 204, the second seat pan track 212, and the seat back track 228 may each have one or more guard areas 236a-c that prevent items from falling into the tracks.

The rollers (e.g., the first seat pan roller 208, the second seat pan roller 216, and the seat back roller 232) may be constructed of any type of structure capable of rolling including, but not limited to, wheels, wheel bearings, and ball bearings. Although the rollers may be used to roll along the tracks (e.g., the first seat pan roller track 204, the second seat pan roller track 212, and the seat back roller track 228), other structures may be used instead of rollers within the tracks including, but not limited to sliding, elements.

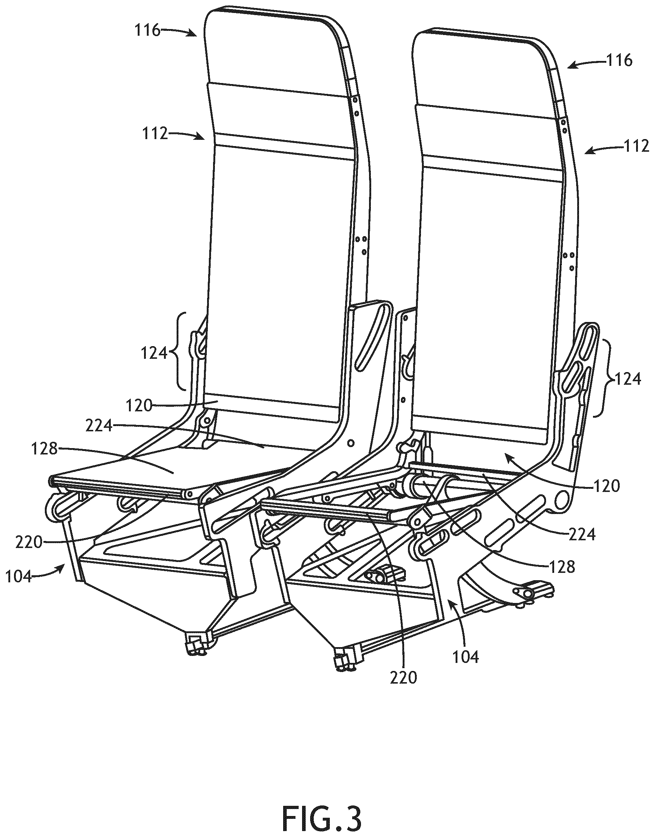

FIG. 3 is a perspective view of a pair of passenger seats 100. FIG. 3 illustrates the seat back 112 including the superior end 116, the inferior end 120, and the lumbar region 124. Also shown is the seat pan 128 (e.g., the left seat plan illustrated as a seat pan frame) including the lateral end 220 and the medial end. The design of the passenger seat 100 may include any style of seat that is capable of incorporating the recline system described herein. \

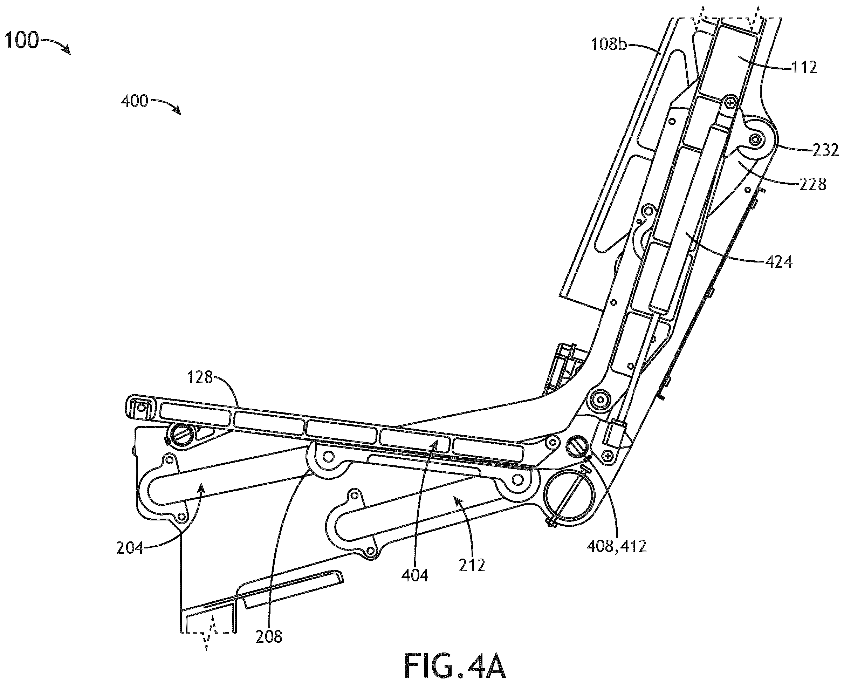

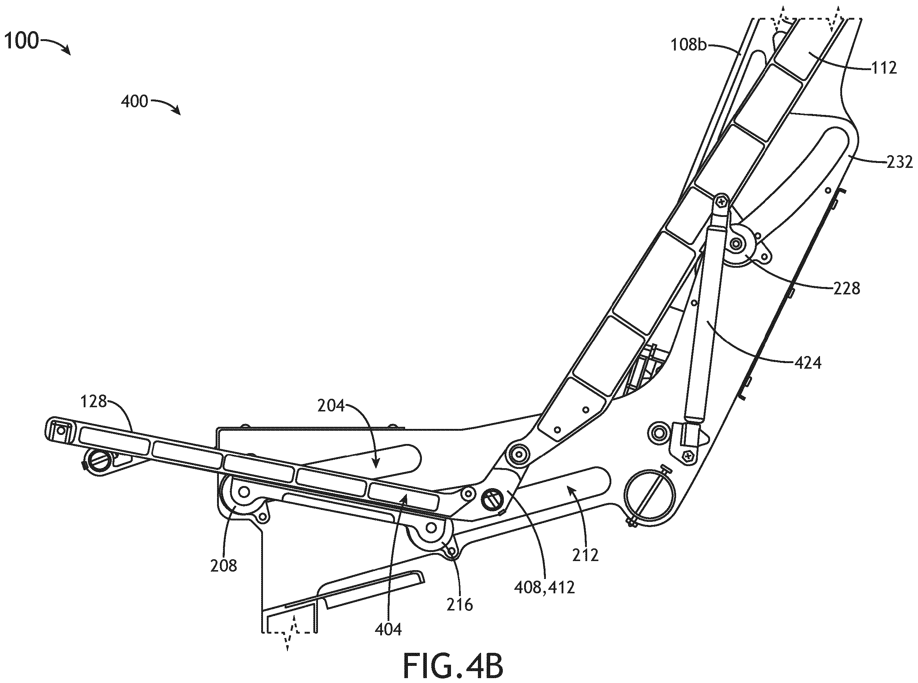

FIG. 4A and FIG. 4B illustrate close-up side-views of the passenger seat 100, focusing on the region where components of the recline system 400 are positioned, with the left spreader 108a removed and the right spreader 108b in the background. The recline mechanism may include one or more components of the passenger seat 10 that aid in or enable the articulation of the passenger seat 100 from the upright sitting position the recline position. For example, the recline system 400 may include a means for guiding the seat pan 128 of the passenger seat 100 forward as the seat pan 128 moves from the upright sitting position to a recline position. For instance, the means for guiding the seat pan 128 may include the first seat pan roller track 204, the first seat pan roller 208. In another instance, the means for guiding the seat pan 128 may further include the second seat pan roller track 212 and the second seat pan roller 216. In embodiments, the recline system includes a stability bar 404 coupled to the first seat pan roller 208 and the second seat pan roller 216. The stability bar 404 adds stability to the recline system 400 and ensures that the distance between the first seat pan roller 208 and the second seat pan roller 216 remains constant. In another example, the recline system 400 may include a means for guiding the seat back 112, such as a lumbar region of the seat back 112. For instance, the means for guiding the seat back 112 may include the seat back roller track 228 and the seat back roller 232.

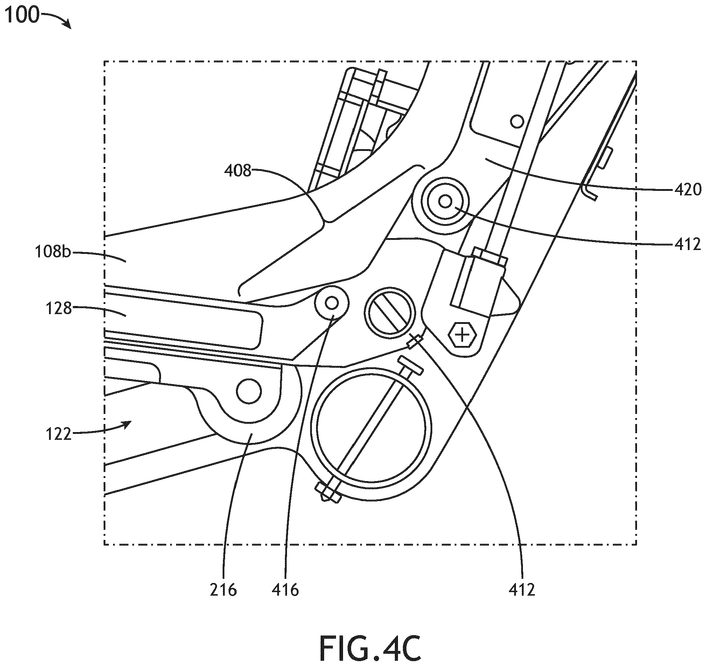

In another example, the recline system 400 may include a pivot attachment 408 coupled to the seat pan 128 and the seat back 112 of the passenger seat 100. The pivot attachment 408 enables the lumbar region 124 to move forward and lower when the seat pan 128 moves from the upright sitting position to the recline sitting position (e.g., the pivot attachment pivotably coupling the seat pan 128 to the seat back 112. The pivot attachment 408 may include a pivot plate 412 as shown in FIG. 4C. The pivot plate 412 includes a seat pan attachment site 416 that couples to the seat pan 128. The pivot plate 412 also includes a seat back attachment site 420 that couples to the seat back 112.

In another example, the recline system 400 may include a biasing device 424 (e.g., a spring) that acts to dampen the movement of the seat back 112 and/or seat pan 128 from the upright sitting position to the recline sitting position. For example, the biasing device 424 may prevent over-acceleration of the movement of the aircraft seat from the upright sitting position to the recline sitting position. The biasing device 424 may include any type of mechanism for dampening the sit/recline motions of the passenger seat 100 including, but not limited to, a spring. In some embodiments, the biasing device 424 may also function to bias the passenger seat 100 from the recline sitting position to the upright sitting position. For example, the biasing device 424 may include a gas spring that stores mechanical energy that will assist the passenger as the passenger seat 100 is articulated from the recline sitting position to the upright sitting position. In some embodiments, the biasing device 424 may also function to lock the passenger seat into one or more positions. For example, the biasing device 424 may include a locking gas spring that dampens the acceleration of the passenger seat from the upright sitting position to the recline sitting position.

The biasing device 424 of the recline systems described herein may include any type of spring including, but not limited to, mechanical and gas springs. Gas springs may include, but not be limited to, standard cylinder springs, fixed-height cylinder springs, spindle only springs, cable cylinder springs, stage cylinder springs, non-rotating cylinder springs, return cylinder springs, auto-return cylinder springs, bouncing cylinder springs, dual-mode cylinder springs, heavy-duty cylinder springs, and oil damper springs. The spring may include a spring having any type of feature (e.g., such as locking mechanisms) including, but not limited to, a spring having an adjustable push-in force via a local knob or remote via a Bowden wire, a spring with a single touch release to allow full extension or the ability to lock it out, a spring with an extended stroke through telescoping members, a spring with variable list, and springs having a degressive capacity where the spring becomes more, not less, powerful as the main cylinder expands. For example, the biasing device 424 may include a gas spring with a locking function (e.g., a locking gas spring) that can be used to lock the passenger seat 100 in a specific seat position.

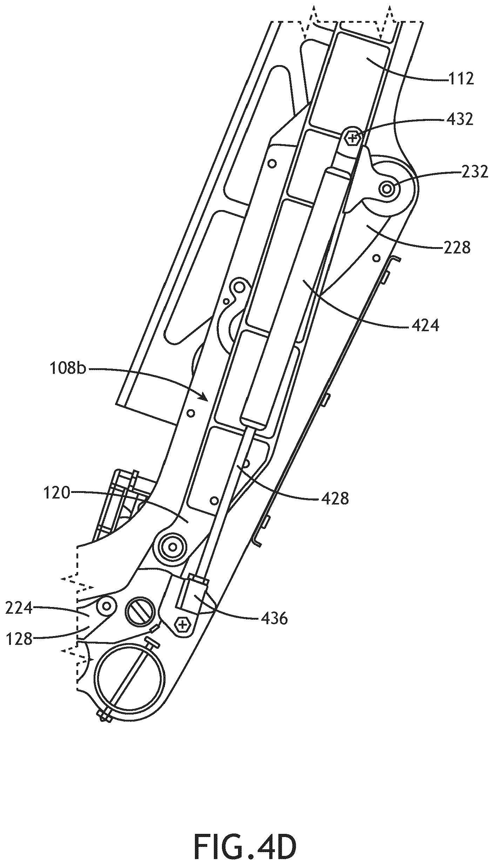

As shown in FIG. 4D, the biasing device 424 (e.g., spring) includes a piston rod 428 and cylinder 430. The spring further includes a top end 432 that attaches to the seat back 112 and a bottom end 436 that attaches to the frame 104 and/or spreader 108a-b. The piston rod 428 may be oriented to either the top end 432 or the bottom end 436 of the spring. In embodiments, the top end 432 of the spring is coupled to the seat back 112. (e.g., at a position equal to or above the position of the seat back roller 208, as shown in FIG. 4D, or at a position lower than the position of the seat back roller 208). In embodiments, the bottom end 436 of the spring is coupled to the frame 104 and/or spreader 108a-b at a position below the inferior end 120 of the seat back 112. The bottom end 436 of the spring may also be positioned medially (e.g., towards the back of the passenger seat 100) from the medial end 224 of the seat pan 128.

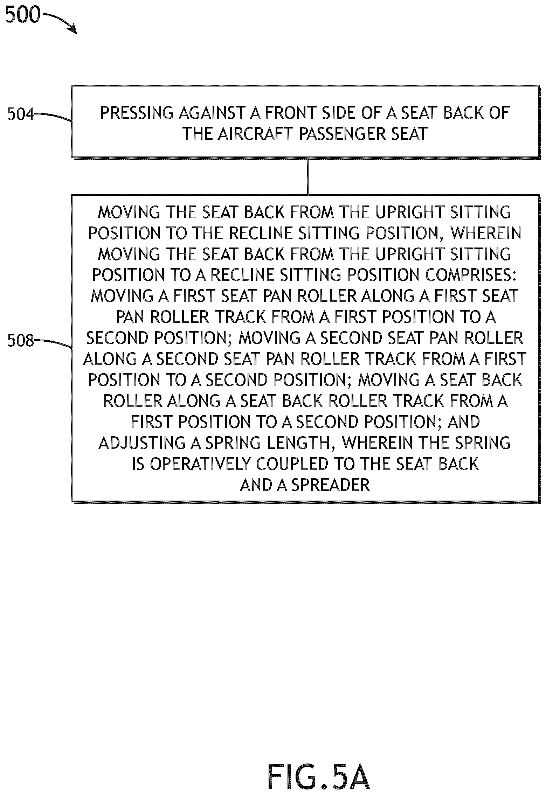

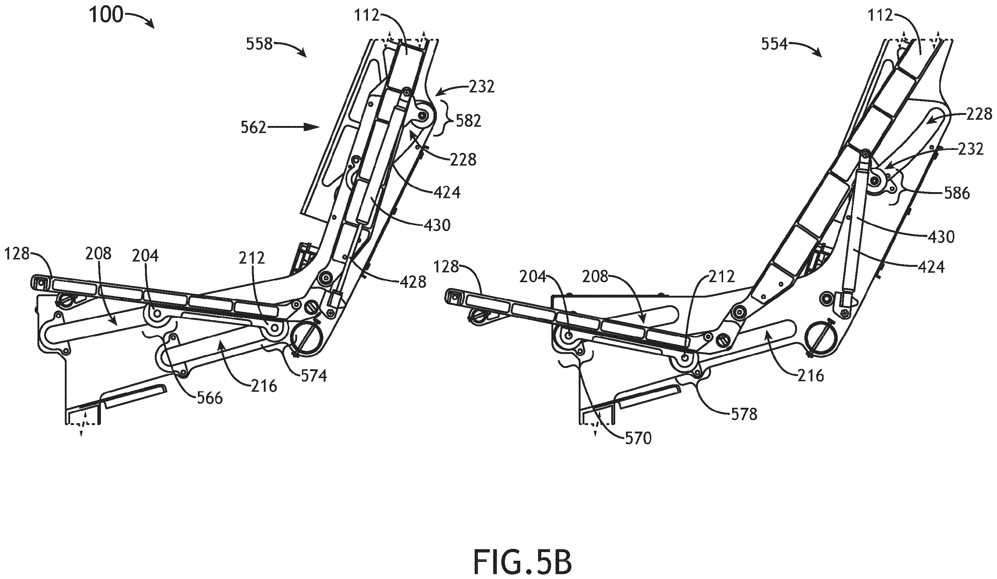

In embodiments, a method 500 for reclining (e.g., articulating) a passenger seat 100 from an upright sitting position 550 (also known as the taxi, take-off, and landing (TTL) position) to a reclined sitting position 554 is disclosed, as shown in FIG. 5A and FIG. 5B. Passenger seats 100 in the upright sitting position 550 and reclined sitting position 554 are also shown in FIG. 4A and FIG. 4B, respectively.

In embodiments, the method 500 includes a step 504 of pressing against a front side 558 of a seat back 112 of the aircraft passenger seat 100. For example, a passenger may apply a pressure 562 upon the front side 558 of the seat back 112. In embodiments, the passenger seat 100 includes a motor that acts to bias the passenger seat 100 from the upright sitting position 550 to the recline sitting position 554.

In another embodiment, the method 500 includes a step of moving the seat back 112 from the upright sitting position 550 to the recline sitting position 554, wherein moving the seat back 112 from the upright sitting position 550 to a recline sitting position 554 comprises: moving the first seat pan roller 208 along the first seat pan roller track 204 from a first position 566 to a second position 570 (e.g., a sitting first roller position to a recline first roller position), moving the second seat pan roller 216 along the second seat pan roller track 212 from a first position 574 to a second position 578 (e.g., a sitting second roller position to a recline second roller position), moving the seat back roller 232 along a seat back roller track 228 from a first position 582 to a second position 586 (e.g., a sitting seat back roller position to a recline seat back roller position), and adjusting a spring length (e.g., the distance between the top end 432 and the bottom end 436 of the spring (e.g., biasing device 424), wherein the spring is operatively coupled to the seat back 112 and a spreader 108 a-b. For example, the spring length may shorten as the passenger seat 100 articulates or moves from the upright sitting position 550 to the recline sitting position 554.

Although rollers (e.g., the first seat pan roller 208, the second seat pan roller 216, and the seat back roller 232) may be used to roll along the tracks (e.g., the first seat pan roller track 204, the second seat pan roller track 212, and the seat back roller track 228), other structures may be used instead of rollers within the tracks including, but not limited to sliding, elements.

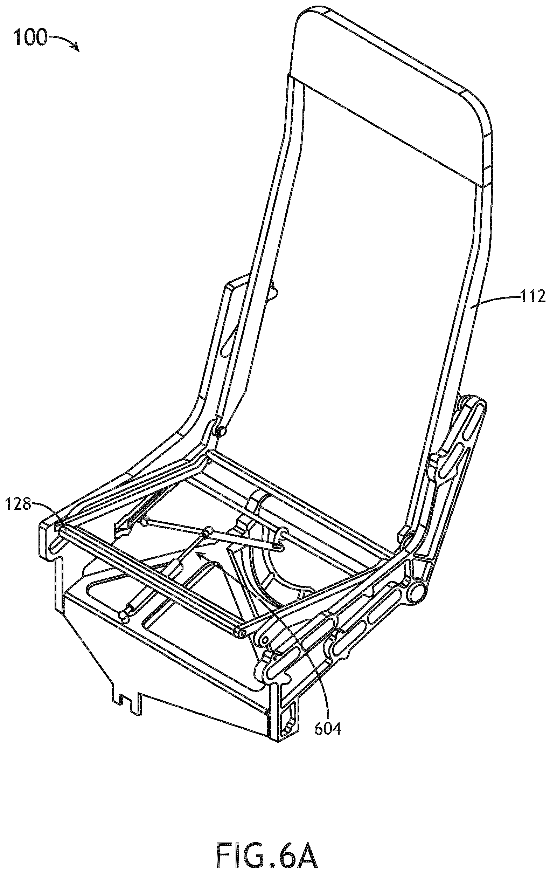

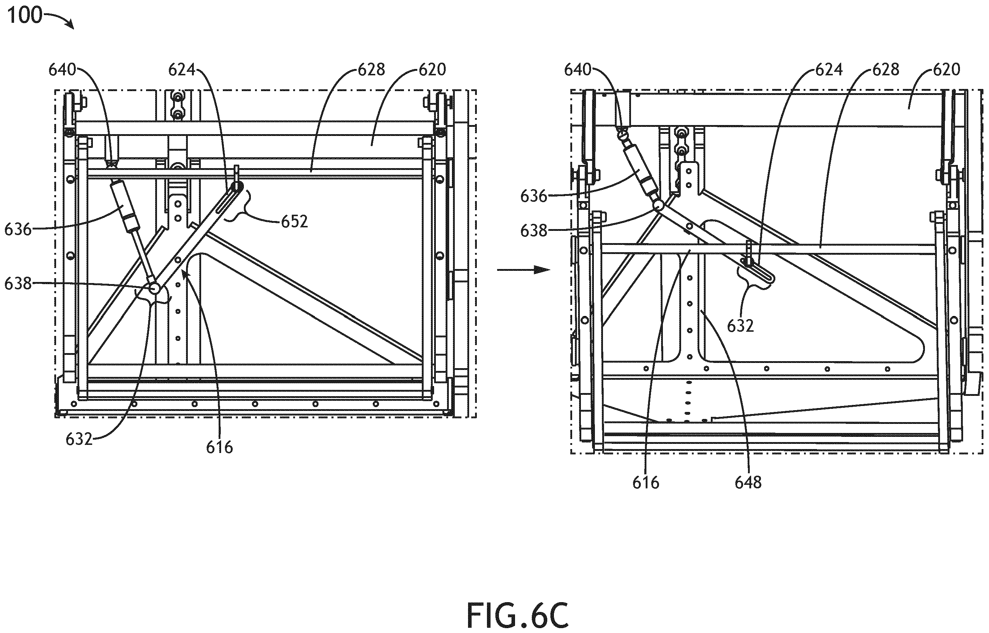

In embodiments, the recline system for the passenger seat 100 includes a one-bar linkage assembly 604, as shown in FIGS. 6A to 6C. The one-bar linkage assembly 604 includes a linkage rod 612. The linkage rod 612 includes a first section 616 coupled to a frame component (e.g., a spreader 108 or beam 620). The linkage rod 612 further includes a second section 624 coupled to the seat pan 128 (e.g., such as a seat pan frame 628). The linkage rod 612 further includes a third section 632 couplable to a spring 636. In the one-bar linkage assembly 604 and other recline systems disclosed herein, the spring 636 may comprise any type of spring. The spring 636 includes a first spring end 638 couplable to the third section 632 and a second spring end 640 coupled to a frame component, such as a seat subframe 644. The spring 636 requires force to extend. Upon adjusting the passenger seat 100 from the upright sitting position to the recline sitting position, the spring 636 is extended, preventing slamming of the passenger seat 100 as it actuates into the full recline position (e.g., an articulation of the passenger seat 100 from the upright sitting position to the recline sitting position engages the spring 636, preventing over-acceleration of a movement of the passenger seat from the upright sitting position to the recline sitting position), as shown in FIG. 6C.

Referring to FIG. 6C, the first section 616 of the linkage rod 612 may be positioned between the second section 624 and the third section 632 so that the linkage rod 612 pivots or rotates at the first section 616 where it is operatively coupled to a brace 648 of the seat subframe 644. Therefore, the first section 616, second section 624, and third section 632 of the one-bar linkage assembly 604 may be placed in any order that enables the articulation of the passenger seat 100 to be dampened by the action of the spring 636 (e.g., either by extension or compression of the spring 636). In embodiments, the linkage rod 612 and/or the spring 636 may include one or more sliders 652 to adjust the movement of the one-bar linkage assembly 604.

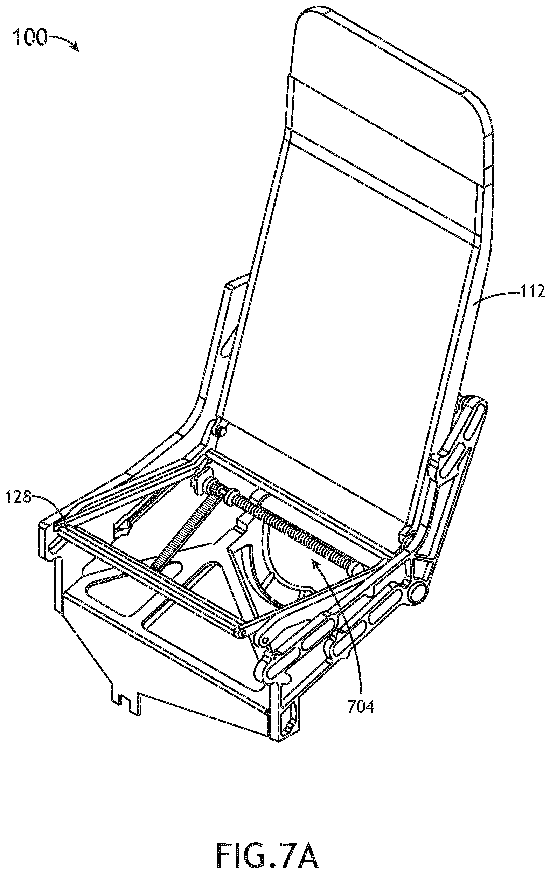

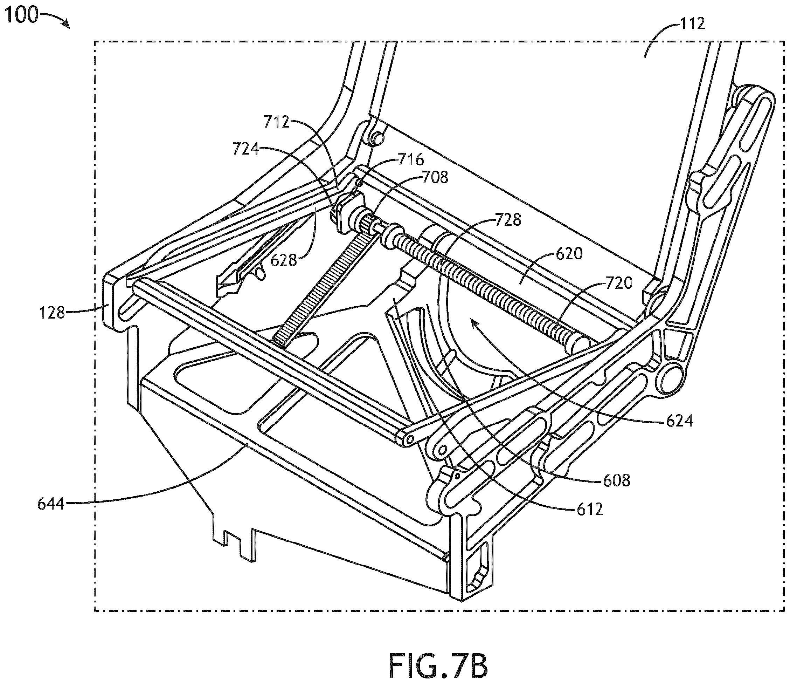

In embodiments, the recline system for the passenger seat 100 includes a rack and pinion assembly 704, as shown in FIGS. 7A to 7C. The rack and pinion assembly 704 includes a rack 708 coupled to a frame component of the passenger seat (e.g., the beam 620). The rack and pinion assembly 704 further includes a rotary dampener 716 coupled to the seat pan 128 at a fixed position on the seat pan 128 or to the seat pan frame 628 (e.g., a seat pan frame component, such as a side frame segment 712). Rotary dampeners 716 are mechanical components that, by slowing down movement through continuous rotation, make the use of the object on which they are installed more controlled and comfortable. The rack and pinion assembly 704 further includes a shaft 720 coupled to the rotary dampener 716, and configured to rotate along with the rotary dampener 716.

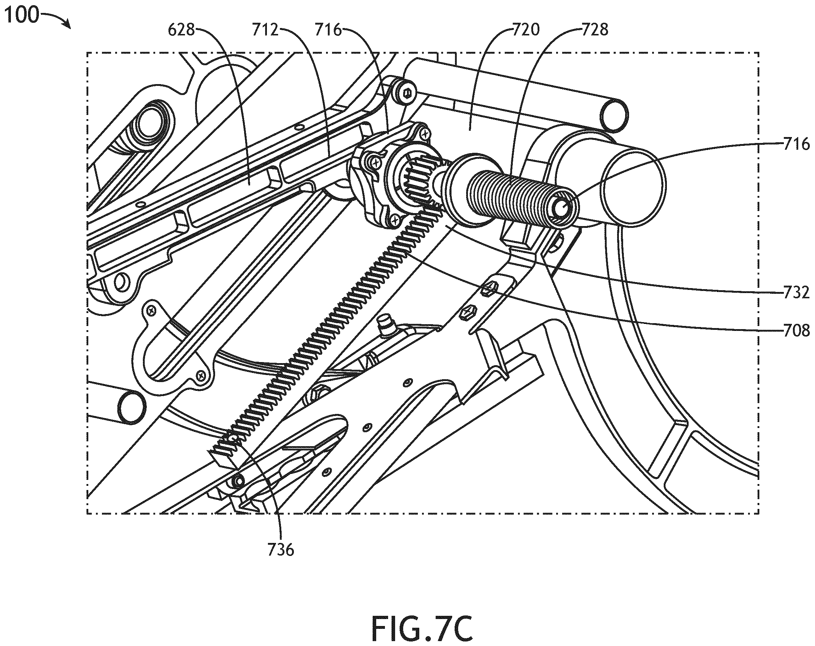

In embodiments, the rack and pinion assembly 704 further includes a pinion 724 coupled to the shaft 720, wherein the pinion 724 is configured to interface with the rack 708. The rack and pinion assembly 704 further includes a torsion spring 728 operationally coupled to the shaft 720 and the pinion 724, wherein the rotation of the pinion 724 along the rack 708 changes a torsion force within the torsion spring 728. For example, and as shown in FIG. 7C, when the passenger seat 100 is in the upright sitting position, the pinion 724 is positioned near the top end 732 of the rack 708, and the torsion spring 728 experiences little torsion force. Upon the passenger seat 100 articulating from the upright sitting position to the reclined sitting position, the pinion 724 rotates as it travels down toward a bottom end 736 of the rack 708. The rotary dampener 716 is also engaged, slowing the recline and preventing over-acceleration of a movement of the passenger seat 100 from the upright sitting position to the recline sitting position. As the pinion 724 rotates during the articulation from the upright sitting position to the reclined sitting position, the torsion upon the torsion spring 728 increases. When the passenger seat 100 is then articulated from a reclined sitting position to the upright sitting position, energy stored in the torsion spring 728 is released, which assists in the movement of the passenger seat 100 to the upright sitting (TTL) position

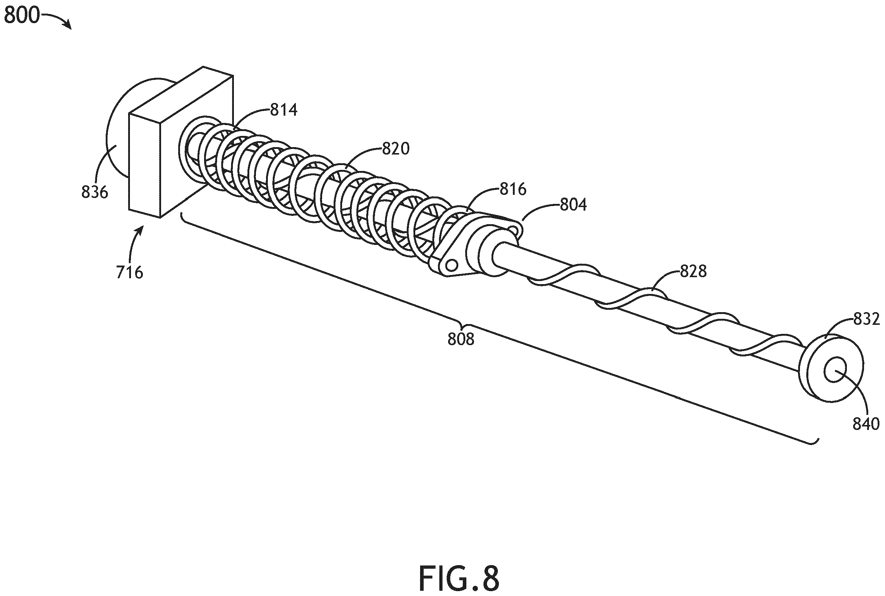

In embodiments, the recline system for the passenger seat 100 includes a seat pan damper assembly 800, as shown in FIG. 8. The seat pan damper assembly 800 includes a rotary dampener 716 coupled to a frame 104 or frame component of the passenger seat (e.g., at a first end 836 of shaft 808). The shaft 808 further includes a spiral thread 828, and a second end 840 coupled to another frame component (e.g., via a bearing 832). The shaft 808 is also slidably coupled to a spiral nut carriage 804. The spiral nut carriage is mounted to a component of the seat pan 128. Sliding of the spiral nut carriage 804 along the shaft 808 causes the shaft 808 to spin due to the interaction of the spiral nut carriage with the spiral thread 828, which is dampened by the rotary dampener 716. The seat pan damper assembly 800 further includes a return spring 820 coiled around the shaft 808 and disposed between the rotary dampener 716 and the spiral nut carriage 804. The return spring 820 is configured so that a rotation of the shaft 808 changes a force in the return spring 820.

When the seat pan damper assembly 800 is in use, the first end 836 and/or second end of the shaft 808 are coupled to non-moving parts of the passenger seat (e.g., the frame 104 or frame components) while the sliding nut carriage 804 is coupled to the seat pan 128 or seat pan assembly, which can articulate from the upright sitting position to a recline sitting position. Movement of the seat pan 128 from the upright sitting position to a recline sitting position causes the sliding nut carriage 804 to slide along the shaft 808, causing a rotation of the shaft 808 that increases torsion in the return spring 820. When the passenger seat 100 is subsequently moved from the recline sitting position to the upright sitting position, the return spring 820 assists in the movement by biasing the rotation of the shaft 808, resulting in a movement of the sliding nut carriage, which bases the seat pan 128 and/or seat pan assembly.

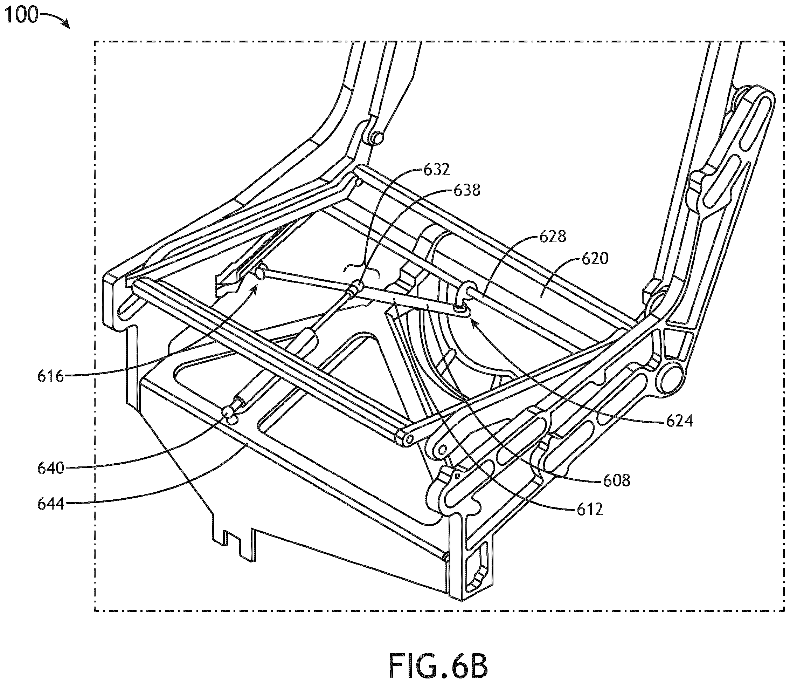

The seat pan damper assembly 800 may be placed at one of several possible positions within the passenger seat 100. For example, the seat pan damper assembly 800 may be positioned similarly as the spring 636 in FIGS. 6B and 6C. For example, the spiral nut carriage 804 may be positioned similarly to the first spring end 638 in FIG. 6B, with the second end 840 coupled to the frame 104.

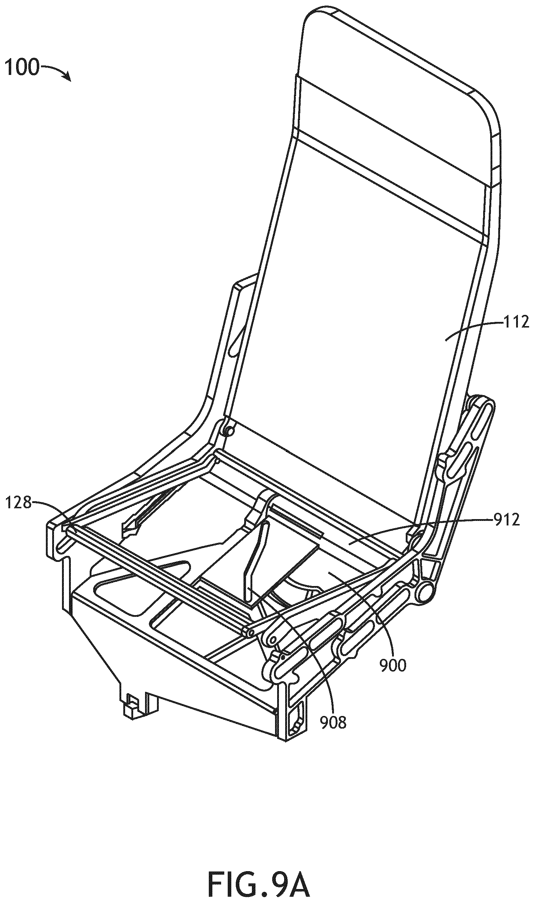

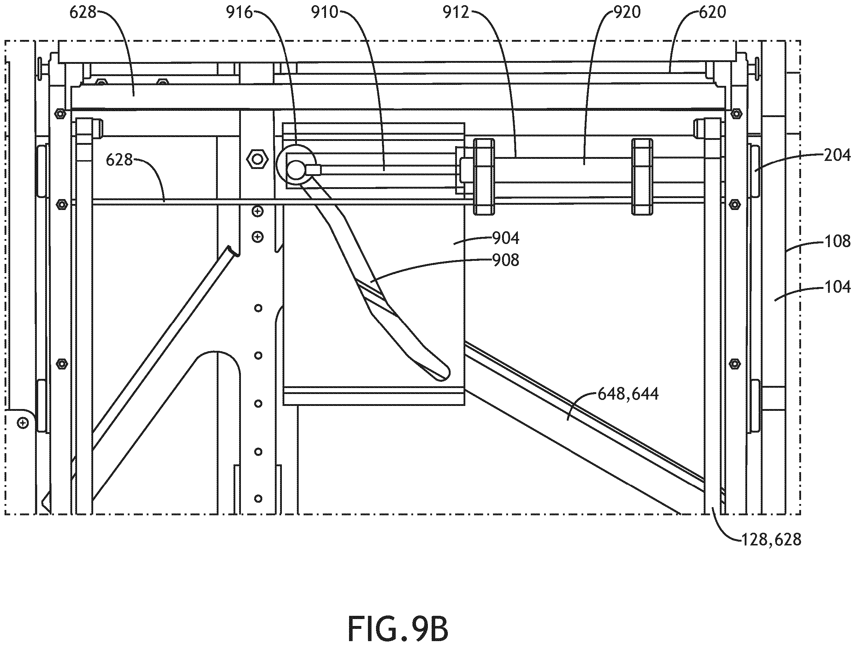

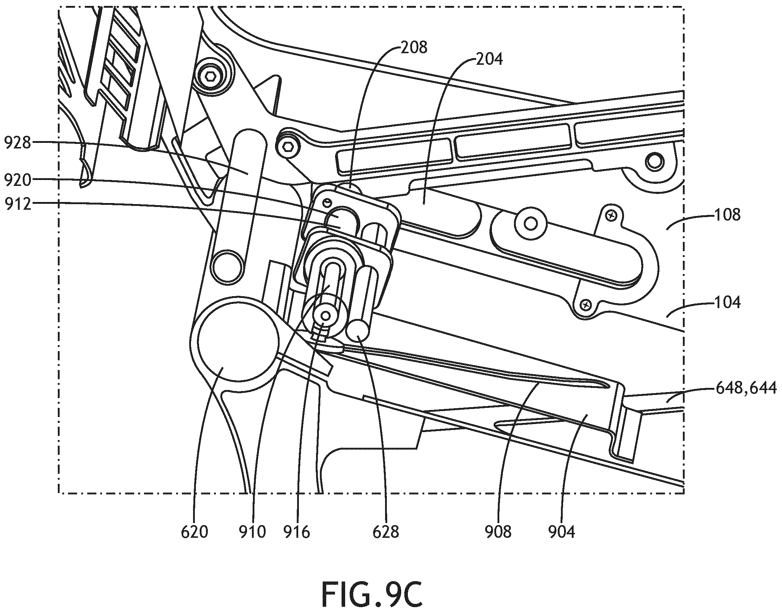

In embodiments, the recline system for the passenger seat 100 includes a cam plate assembly 900, as shown in FIGS. 9A to 9C. The cam plate assembly 900 includes a cam plate 904 coupled to the frame 104 (e.g., to the beam 620, a brace 648 of the seat subframe 644, or another frame component). The cam plate 904 includes a cam path 908 that is operatively coupled to a piston 910 of a spring 912 (e.g., via a coupler on the free end 916 of the spring 912). The spring 912 is coupled to the seat pan frame 628. The cam plate assembly 900 is positioned so that when the passenger seat 100 articulates from the upright sitting position to the recline sitting position, the free end 916 of the piston 910 is forced to follow the cam path 908, resulting in a corresponding change in length of the spring 912 as the piston 910 moves in and out of the cylinder 920. Movement of the piston 910 within the cylinder 920 is dampened, resulting in an overall dampened movement as the passenger seat articulates between the upright sitting position and the recline sitting position (e.g., as the seat pan 128 actuates, the free end 916 of the spring 912 (gas spring) follows the cam path 908 and compresses the spring 912, providing the actuation force and dampening), which prevents over-acceleration of a movement of the passenger seat 100 from the upright sitting position to the recline sitting position.

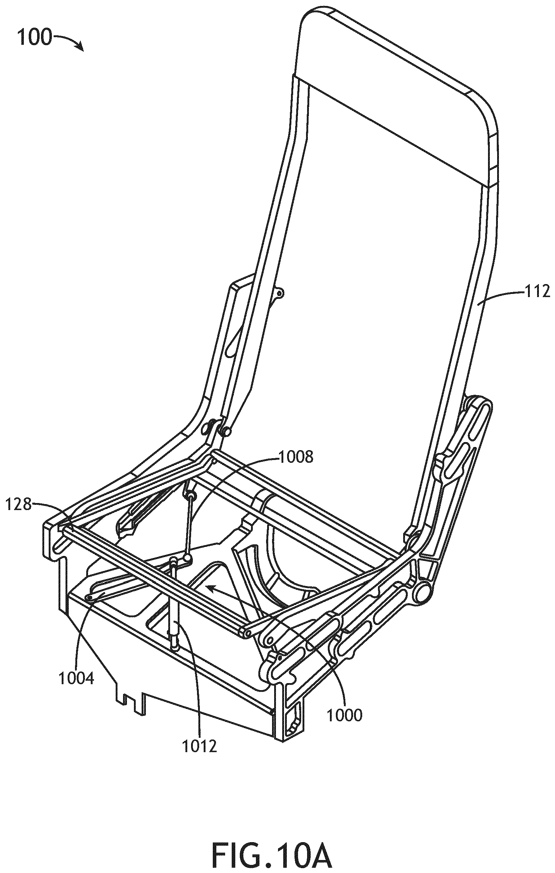

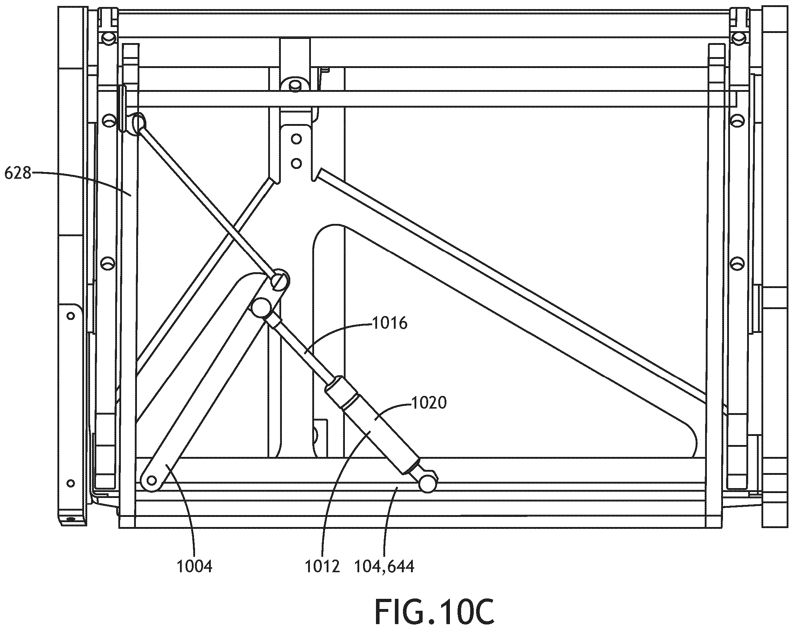

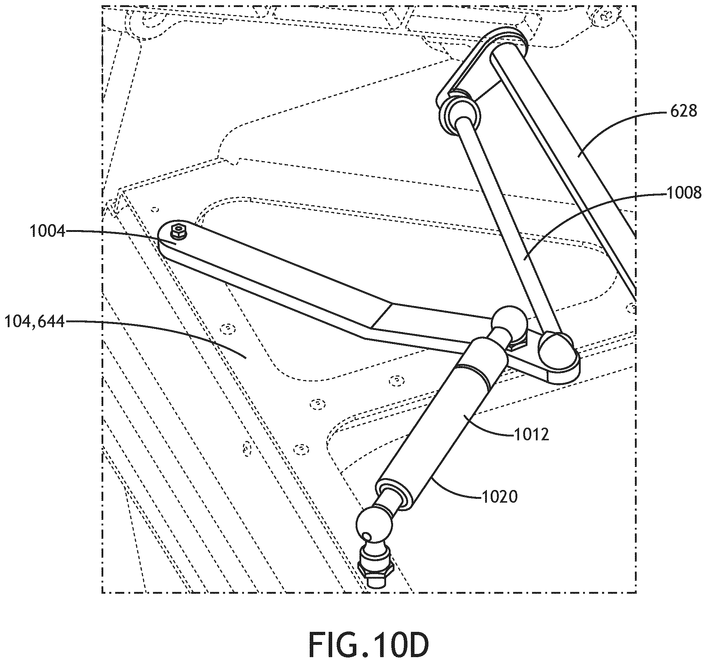

In embodiments, the recline system for the passenger seat 100 includes a two-bar linkage assembly 1000, as shown in FIGS. 10A to 10D. The two-bar linkage assembly 1000 includes a first linkage 1004 pivotably coupled to the frame 104 and/or a frame component (e.g., such as a seat subframe 644), and a second linkage 1008 pivotably coupled to both the first linkage 1004 and the seat pan 128 or seat pan frame 628. The two-bar linkage assembly 1000 further includes a spring 1012 (e.g., a gas spring) pivotably coupled to either the frame 104 or the seat pan 128 and either to the first linkage 1004 or the second linkage 1008.

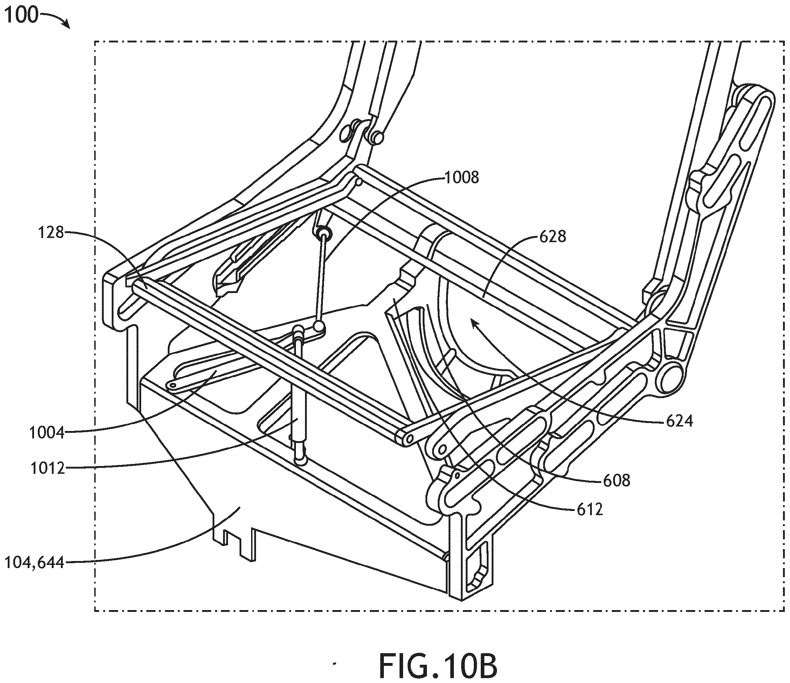

The position and positions of contact of the first linkage 1004, the second linkage 1008, and the spring 1012 along the seat pan 128 and frame 104 may vary as long as at least one linkage is coupled to the frame 104 and at least one linkage is coupled to the seat pan 128. Therefore, the linkage assembly 1000 may be arranged in one of several possible multiple arrangements on the passenger seat 100 For example, and as shown in FIGS. 10B-10D, the first linkage 1004 is pivotably coupled to the frame 104 (e.g., the seat subframe 644), the second linkage 1008 is pivotably coupled to the first linkage 1004 and the seat pan frame 628, and the spring 1012 is pivotably coupled to the first linkage 1004 and the frame 104 (e.g., the seat subframe 644). When in the upright seating position, the spring 1012 is extended, with the piston 1016 extending from the cylinder 1020, as shown in FIGS. 10B to 10C. Upon articulation of the passenger seat 100 to the recline sitting position, the spring 1012 is compressed, as shown in FIG. D. The compression of the spring 1012 provides a dampening effect that prevents over-acceleration of a movement of the passenger seat from the upright sitting position to the recline sitting position. We note that the spring 1012 may also be pivotably coupled to the seat pan frame 628 and either the first linkage 1004 or the second linkage 1008. In this arrangement, the piston 1016 is shortened in the upright sitting position and extended in the recline sitting position, with the spring 1012 providing a dampening effect while the spring 1012 extends.

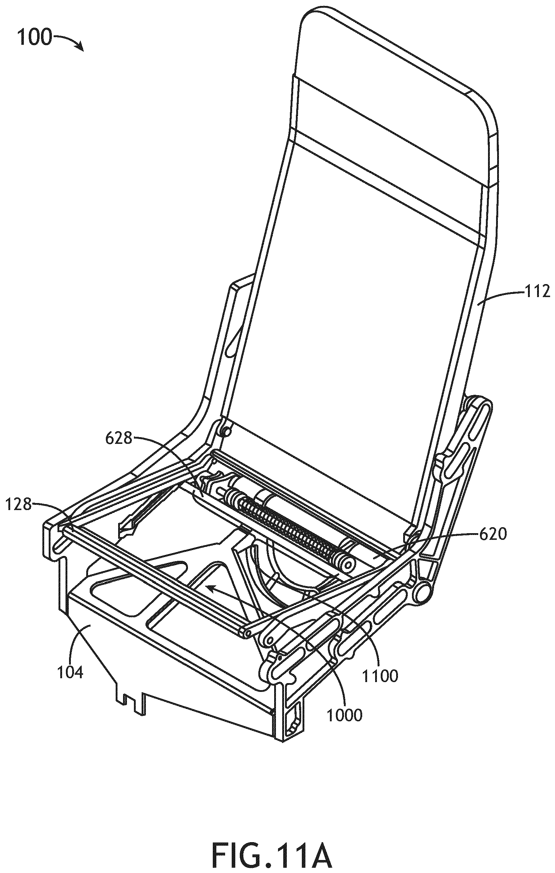

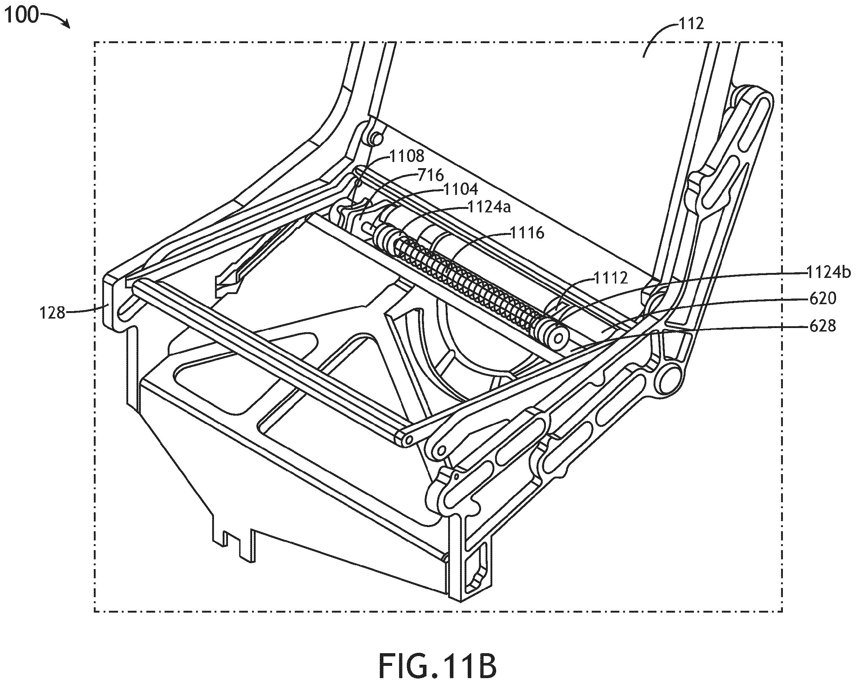

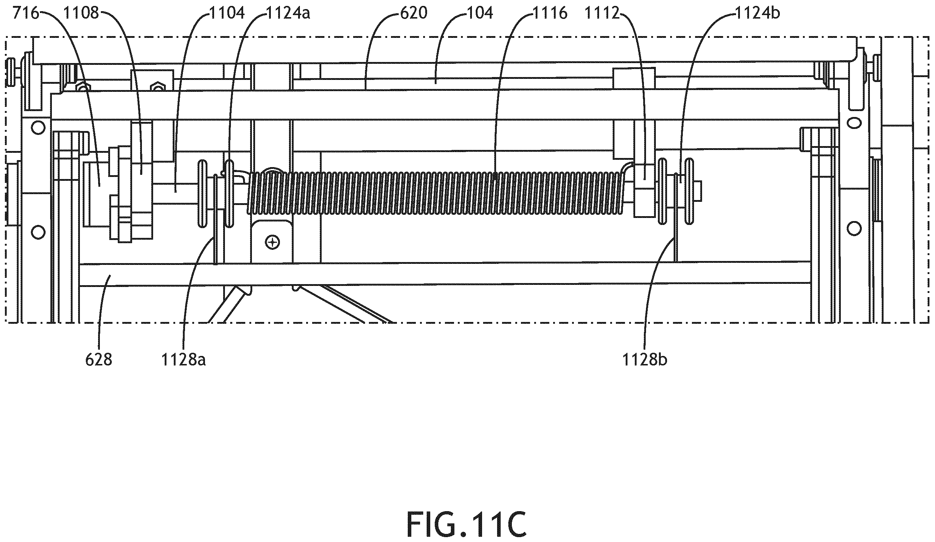

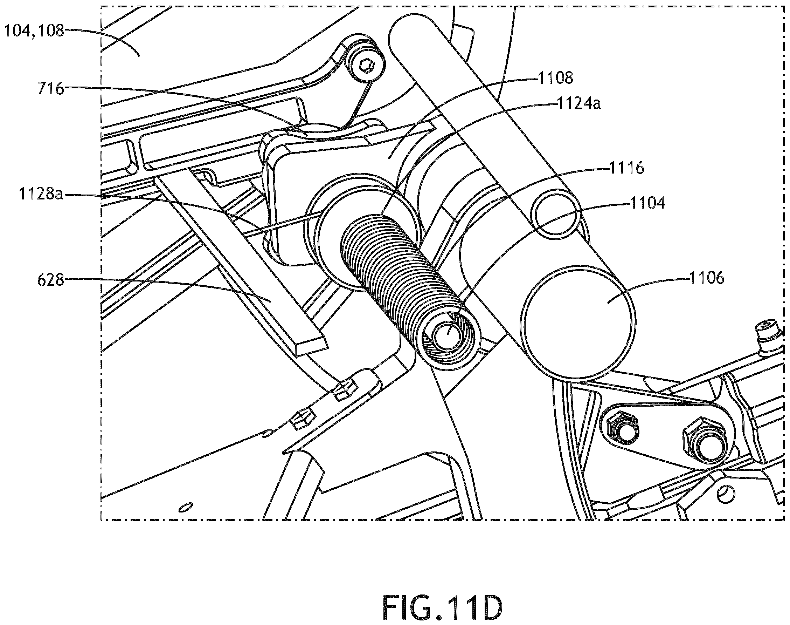

In embodiments, the cable assembly 1100 for the passenger seat 100 includes a cable assembly 1100, as shown in FIGS. 11A-11D. The cable assembly 1100 includes a rod 1104, and a least one bushing (e.g., a first bushing 1108 and a second bushing 1112) that is coupled to the frame 104, such as the beam 620. The rod 1104 is configured to fit inside, and rotate freely within, the at least one bushing 1108, 1112 (e.g., the at least one bushing 1108, 1112 accommodating the rod 1104). In embodiments, the cable assembly 1100 further includes a rotary dampener 716 coupled to the first bushing 1108 and to the rod 1104 so that the rotation of the rod 1104 is dampened by the rotary dampener 716 as it rotates within the first bushing 1108.

In embodiments, the cable assembly 1100 further includes a torsion spring 1116 coiled around the rod 1104. The torsion spring 1116 is configured so that the torsion force within the torsion spring 1116 changes with the rotation of the rod 1104. The cable assembly 1100 further includes at least on the cable reel 1124a-b encompassing (e.g., placed upon) the rod 1104 and at least one cable 1128a-b coupled to the cable reel 1124-ab and the seat pan 128 and/or seat frame 628 so that when the rod 1104 rotates, the cable 1128a-b is either wrapped onto, or off of, the cable reel 1124a-b. When the passenger seat 100 is articulated from the upright sitting position to the recline sitting position, the distance between the beam 620 and the seat pan frame 628 increases, and the cable 128a-b is pulled away from the rod 1104 and cable reel 124a-b, rotating the rod 1104 and increasing the torsion upon of the torsion spring 1116, dampening the movement of the passenger seat 100 and preventing over-acceleration of the movement of the passenger seat from the upright sitting position to the recline sitting position. When the passenger seat 100 is articulated from the recline sitting position to the upright sitting position, the cable reel 1124a-b rewinds the cable 128a-b, and the torsion spring releases torsion, which may assist the movement of the passenger seat 100 into the upright sitting position.

We note that the recline mechanisms described herein may be placed in different working arrangements within the passenger seat and that these recline mechanisms may be powered by devices (e.g., motors or actuators) operating under electrical or other power. Therefore, the design of the recline mechanisms are not limited to the demonstrated embodiments.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed, and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

## Claims

1. A recline system for a passenger seat comprising:
a means (204, 208, 212, 216) for guiding a seat pan (128) of the passenger seat (100) forward as the seat pan moves from an upright sitting position to a recline sitting position;
a pivot attachment (408) coupled to the seat pan and a seat back (112) of the passenger seat, wherein the pivot attachment enables a lumbar region of the seat back to move forward and lower when the seat pan moves from the upright sitting position to the recline sitting position;
a means for guiding the lumbar region of the seat back; and
a spring (424) coupled to the seat back and a frame component of the passenger seat, wherein the spring biases the passenger seat from the recline sitting position to the upright sitting position.

2. The recline system of claim 1, wherein the spring comprises a locking gas spring, wherein the locking gas spring dampens an acceleration of the passenger seat from the upright sitting position to the recline sitting position.

3. The recline system of claim 1 or 2, wherein the means for guiding the seat pan comprises a first seat pan roller (208) operatively coupled to the seat pan configured to roll along a first seat pan roller track (204).

4. The recline system of claim 3, wherein the means for guiding the seat pan further comprises a second seat pan roller (216) operatively coupled to the seat pan configured to roll along a second seat pan roller track (212).

5. The recline system of claim 4, wherein the first seat pan roller and the second seat pan roller are coupled to each other by a stability bar (404).

6. The recline system of claim 3, wherein the first seat roller track is integrated into a spreader (108).

7. The recline system of any preceding claim, wherein the means for guiding the lumbar region of the seat back comprises at least one seat back roller coupled to the seat back configured to roll along a seat back roller track.

8. The recline system of claim 7, wherein a top end of the spring is coupled to the seat back.

9. The recline system of claim 7, wherein the seat back comprises a superior end and an inferior end and the seat pan comprises a lateral end and medial end, wherein a bottom end of the spring is coupled to the frame at a position below the inferior end of the seat back, and medially from the medial end of the seat pan.

10. The recline system of any preceding claim, wherein the pivot attachment comprises a pivot plate (412), wherein the pivot plate comprises:
a seat pan attachment site configured to operatively couple to the seat pan, wherein the seat pan and the pivot plate are configured to pivot relative to each other; and
a seat back attachment site configured to operatively couple to the seat back, wherein the seat back and the pivot plate are configured to pivot relative to each other.

11. A passenger seat comprising:
a frame (104) comprising:
a left spreader (108a);
a right spreader (108b);
a beam (620) coupled to the left spreader and the right spreader; and
a lower frame member coupled to the left spreader and the right spreader, and positioned below a seat pan;
the seat pan mounted between the left spreader and the right spreader, the seat pan comprising a seat pan frame;
a seat back pivotably coupled to the seat pan;
a means for guiding the seat pan forward and lower as the seat pan moves from an upright sitting position to a recline sitting position comprising a first seat pan roller operatively coupled to the seat pan configured to roll along a first seat pan roller track;
a means for guiding the seat back comprising at least one seat back roller coupled to the seat back configured to roll along a seat back roller track;
a pivot attachment coupled to the seat pan and the seat back, wherein the pivot attachment enables a lumbar region of the seat back to move forward and lower when the seat pan moves from the upright sitting position to the recline sitting position; and
a means for preventing over-acceleration of a movement of the passenger seat from the upright sitting position to the recline sitting position.

12. The passenger seat of claim 11, wherein the means for guiding the seat pan further comprises a second seat pan roller operatively coupled to the seat pan configured to roll along a second seat pan roller track.

13. The passenger seat of claim 11, wherein the means for preventing the over-acceleration of a movement of the passenger seat from the upright sitting position to the recline sitting position comprises a spring coupled to the seat back and the frame of the passenger seat, wherein a top end of the spring is coupled to the seat back, wherein a bottom end of the spring is coupled to the frame at a position below an inferior end of the seat back, and medially from a medial end of the seat pan; or
wherein the means for preventing the over-acceleration of a movement of the passenger seat from the upright sitting position to the recline sitting position comprises:
a first linkage rod comprising:
a first section coupled to a first frame component;
a second section coupled to the seat pan; and
a third section end couplable to a spring; and
the spring comprising:
a first spring end coupled to the third section; and
a second spring end coupled to a second frame component, wherein an articulation of the passenger seat from the upright sitting position to the recline
sitting position engages the spring; or
wherein the means for preventing the over-acceleration of a movement of the passenger seat from the upright sitting position to the recline sitting position comprises:
a rack coupled to the frame;
a rotary dampener mount coupled to the seat pan;
a rotary dampener coupled to the seat pan;
a shaft operatively coupled to the rotary dampener; and configured to rotate relative to the rotary dampener;
a pinion coupled to the shaft, wherein the pinion is configured to interface with the rack; and
a torsion spring operationally coupled to the shaft and the pinion, wherein the rotation of the pinion along the rack changes a torsion force within the torsion spring; or
wherein the means for preventing the over-acceleration of a movement of the passenger seat from the upright sitting position to the recline sitting position comprises:
a seat pan damper comprising:
a rotary dampener coupled to the seat pan, the seat back, or the frame of the passenger seat;
a shaft coupled to the rotary dampener on a first end, and coupled to a bearing on a second end, the shaft comprising a spiral thread;
a spiral nut carriage slidably coupled to the shaft, wherein a sliding of the spiral nut carriage along the shaft caused the shaft to spin due to an interaction of the spiral nut carriage with the spiral thread; and
a return spring coiled around the shaft; and disposed between the rotary dampener and the spiral nut carriage; or
wherein the means for preventing the over-acceleration of a movement of the passenger seat from the upright sitting position to the recline sitting position comprises:
a cam plate attached to the frame comprising a cam path;
a spring comprising:
a cylinder coupled to the seat pan frame; and
a piston comprising a coupler operatively coupled to the cam path, wherein the movement of the passenger seat from the upright sitting position to the recline sitting position forces the coupler along the cam path, wherein forcing the coupler along the cam path changes a length of the spring; or
wherein the means for preventing over-acceleration of a movement of the passenger seat from the upright sitting position to the recline sitting position comprises:
a first linkage coupled to a first frame component;
a second linkage coupled to the first linkage and the seat pan;
a spring coupled to the first frame component or a second frame component and to the first linkage or the second linkage, wherein the movement of the passenger seat from the upright sitting position to the recline sitting position compresses the spring;
or
wherein the means for preventing over-acceleration of a movement of the passenger seat from the upright sitting position to the recline sitting position comprises:
a rod;
at least one bushing coupled to the frame and configured to accommodate the rod;
a rotary dampener coupled to one of the at least one bushing coupled to a first end of the rod, wherein a rotation of the rod within the at least one bushing is dampened by the rotary dampener;
a torsion spring coiled around the rod, wherein a rotation of the rod changes a torsion force within the torsion spring;
at least one cable reel encompassing the rod; and
at least one cable coupled to the at least one cable reel and the seat pan, wherein the movement of the passenger seat from the upright sitting position to the recline sitting position causes the rod to rotate and changes a length of the at least one cable that is wrapped around the at least one cable reel.

14. A method for reclining an aircraft passenger seat from an upright sitting position to a reclined sitting position comprising:
pressing against a front side of a seat back of the passenger seat; and
moving the seat back from the upright sitting position to the recline sitting position, wherein moving the seat back from the upright sitting position to a recline sitting position comprises:
moving a first seat pan roller along a first seat pan roller track from a first position to a second position;
moving a second seat pan roller along a second seat pan roller track from a first position to a second position;
moving a seat back roller along a seat back roller track from a first position to a second position; and
adjusting a spring length, wherein the spring is operatively coupled to the seat back and a spreader.
